# EUROPEAN PATENT APPLICATION

(11) **EP 2 835 732 A2**
(43) Date of publication of application: **11.02.2015**
(21) Application number: 14180040.9
(22) Date of filing: 06.08.2014
(51) Int. Cl.: G06F 3/0488

(54) **Electronic device provided with touch screen and operating method thereof**

(30) Priority: 06.08.2013 KR 20130092949
(71) Applicant: Samsung Electronics Co., Ltd, Gyeonggi-do 443-742 (KR)
(72) Inventor: Kim, Kyunghwan, 443-742 Gyeonggi-do (KR); Kim, Youngkyoo, 443-742 Gyeonggi-do (KR); Jang, Dongho, 443-742 Gyeonggi-do (KR)
(74) Representative: Jenkins, Richard Gavin

(57) **Abstract**

A method of operating a lock screen of an electronic device provided with a touch screen and an electronic device, in which a user can more conveniently unlock the lock screen through a user input and feedback in response to the user input, without looking at the electronic device is provided. The method includes receiving a user input while a lock screen function is operated, providing feedback configured in response to the user input, comparing input information according to the user input with preconfigured pattern information, and operating the lock screen according to whether the input information accords with the pattern information. The present disclosurecan be applied to various other embodiments based on the aforementioned embodiment.

## Description

### TECHNICAL FIELD

The present disclosure relates to an electronic device provided with a touch screen and an operating method thereof., More particularly, the present disclosure relates to a method of operating a lock screen of an electronic device provided with a touch screen and an electronic device.

### BACKGROUND

Recently, with the development of digital technologies, various electronic devices (e.g., a mobile communication terminal, a Personal Digital Assistant (PDA), an electronic organizer, a smart phone, a tablet Personal Computer (PC), and the like) which can perform communication and personal information processing have come to market. The electronic devices have reached a mobile convergence stage of encompassing an area of other terminals without being confined to the unique areas traditionally associated with the electronic device. For example, the electronic devices may be provided with various functions including call functions such as a voice call and a video call, message transmission/reception functions such as a Short Message Service (SMS), a Multimedia Message Service (MMS), and an e-mail, a navigation function, a photography function, a broadcast reproduction function, a media (e.g., a video,a music, and the like) reproduction function, an internet function, a messenger function, a Social Networking Service (SNS) function, and the like.

The recent electronic devices are provided with a touch screen and provide a touch screen locking function, namely, a lock screen function. Such a lock screen function is used to prevent the electronic devices from recognizing a touch input which is not intended by a user. In general, there is a difference between a locked state of the touch screen by the lock screen function and a deactivated state of the touch screen. For example, in the deactivated state of the touch screen, a user's touch input cannot be received, but in the locked state of the touch screen, the touch screen is activated and thus, a user input for unlocking the lock screen can be received.

In general, in order to unlock the lock screen, a user manipulates the electronic device such that a guide for unlocking the lock screen is displayed on the touch screen, and inputs a pattern, a password or a pin number, which is configured in advance to unlock the lock screen, with reference to the guide displayed on the touch screen.

However, according to the method of the related art in which the guide is displayed for unlocking the lock screen, a user has to input the remembered pattern, password, or pin number with reference to the given guide while always looking at the electronic device. Thus, the user should must look at the electronic device to unlock the lock screen and accurately input a predetermined location (area) according to the guide displayed on the screen.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and a device for operating a lock screen in an electronic device, which can more effectively unlock the lock screen in the electronic device including a touch screen based input unit.

In accordance with an aspect of the present disclosure, and electronic device is provided. The electronic device includes all devices using an Application Processor (AP), a Graphic Processing unit (GPU), and a Central Processing Unit (CPU), such as all information communication devices, all multimedia devices, and all application devices thereof, which support functions according to the various embodiments of the present disclosure.

Another aspect of the present disclosure is to provide a method and a device for operating a lock screen in an electronic device, in which a user can conveniently and easily unlock the lock screen without looking at the electronic device.

Another aspect of the present disclosureis to provide a method and a device for operating a lock screen in an electronic device in which an input for unlocking the lock screen can be received from a user irrespective of an input area of a touch screen in the electronic device provided with the touch screen.

Another aspect of the present disclosure is to provide a method and a device for operating a lock screen in an electronic device, which can more conveniently and easily unlock the lock screen through auser input and feedback (e.g., a vibration, a sound, lamp blinking, or the like) provided in response to the user input in the electronic device provided with a touch screen.

Another aspect of the present disclosure is to provide a method and a device for operating a lock screen in an electronic device, which can provide user convenience for unlocking the lock screen and enhance security in the electronic device provided with a touch screen.

Another aspect of the present disclosure is to provide a method and a device for operating a lock screen in an electronic device, which can improve user convenience and usability of the electronic device by implementing an optimal environment for operating the lock screen of the electronic device provided with a touch screen.

In accordance with an aspect of the present disclosure, a method of operating a lock screen in an electronic device is provided. The method includes receiving a user input while a lock screen function is operated, providing feedback configured in response to the user input, comparing input information according to the user input with preconfigured pattern information, and operating the lock screen according to whether the input information accords with the pattern information.

In accordance with another aspect of the present disclosure, a non-transitory computer readable recording medium in which programs for executing the method in a processor are recorded is provided. The non-transitory computer readable recording medium includes a program that,when executed, causes at least one processor to perform an operation of receiving a user input while a lock screen function is operated, an operation of providing feedback configured in response to the user input, an operation of determining whether input information according to the user input accords with preconfigured pattern information, and an operation of operating a lock screen according to whether the input information accords with the pattern information.

In accordance with another aspect of the present disclosure, an electronic device is provided.The electronic device includes a touch screen configured to receive a user input while a lock screen function of the electronic device is operated, and a controller configured to control configured feedback to be output in response to the user input while the lock screen function is operated, and to operatea lock screen by determining whether input information according to the user input accords with preconfigured pattern information.

In the above mentioned aspects, the features and technical merits of the present disclosure are slightly widely summarized in order that those skilled in the art may understand the present disclosure through the detailed description of the present disclosurelater. In addition to the features and the technical merits, additional features and technical merits forming the subject of claims of the present disclosurewill be better understood from the detailed descriptions of the present disclosure which will be described below.

As described above, the present disclosure provides an electronic device provided with a touch screen and an operating method thereof, which can more conveniently and easily operate a lock screen of the electronic device. Furthermore, according to various embodiments of the present disclosure, a user can conveniently and easily unlock the lock screen irrespective of an input area of the touch screen without looking at the electronic device.

Moreover, according to embodiments of the present disclosure, when a user input for unlocking the lock screen is detected in the electronic device provided with the touch screen, preconfigured feedback (e.g., a vibration, a sound, lamp blinking, or the like) may be provided in response to the user input. Accordingly, a user can unlock the lock screen through the simple user input without a guide displayed in advance on the touch screen. Furthermore, the user can recognize a lock screen unlocking method with senses (e.g., touch, sight, and hearing) when unlocking the lock screen of the electronic device. In addition, according to embodiments of the present disclosure, a user can unlock the lock screen through a user input and feedback in response to the user input even without looking at the electronic device (e.g., in a state of grasping a portable terminal in a pocket), thereby enhancing convenience for unlocking the lock screen while maintaining security according to the unlocking of the lock screen.

Thus, according to various embodiments of the present disclosure, an optimal environment can be implemented for operating the lock screen of the electronic device provided with the touch screen, thereby improving usability, convenience, and competitiveness of the electronic device. The present disclosure may be implemented by all types of user devices such as a mobile communication terminal, a smart phone, a table PC, a PDA, and the like, and various devices capable of supporting the lock screen function of the electronic device according to various embodiments of the present disclosure.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description in conjunction with the accompanying drawings, in which:
FIG. 1 is a block diagram schematically illustrating a configuration of an electronic device according to an embodiment of the present dislcosure.
FIGS. 2, 3, 4, and 5 illustrate examples of operating a lock screen in an electronic device according to an embodiment of the present dislcosure;
FIGS. 6, 7, 8, 9, 10, 11 and 12 illustrate examples of an operation for unlocking a lock screen in an electronic device according to an embodiment of the present dislcosure;
FIG. 13 illustrates an example of a user interface for operating a lock screen in an electronic device according to an embodiment of the present dislcosure;
FIG. 14 is a flowchart illustrating a method of operating a lock screen in an electronic device according to an embodiment of the present dislcosure; and
FIG. 15 is a flowchart illustrating a method of operating a lock screen in an electronic device according to an embodiment of the present dislcosure.
Throughout the drawings, it should be noted that like reference numbers are used to depict the same or similar elements, features, and structures.

### DETAILED DESCRIPTION

The following description with reference to the accompanying drawingsis provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

According to various embodiments of the present disclosure, an electronic device may include communication functionality. For example, an electronic device may be a smart phone, a tablet Personal Computer (PC), a mobile phone, a video phone, an e-book reader, a desktop PC, a laptop PC, a netbook PC, a Personal Digital Assistant (PDA), a Portable Multimedia Player (PMP), an mp3 player, a mobile medical device, a camera, a wearable device (e.g., a Head-Mounted Device (HMD), electronic clothes, electronic braces, an electronic necklace, an electronic appcessory, an electronic tattoo, or a smart watch), and/or the like.

According to various embodiments of the present disclosure, an electronic device may be a smart home appliance with communication functionality. A smart home appliance may be, for example, a television, a Digital Video Disk (DVD) player, an audio, a refrigerator, an air conditioner, a vacuum cleaner, an oven, a microwave oven, a washer, a dryer, an air purifier, a set-top box, a TV box (e.g., Samsung HomeSyncTM, Apple TVTM, or Google TVTM), a gaming console, an electronic dictionary, an electronic key, a camcorder, an electronic picture frame, and/or the like.

According to various embodiments of the present disclosure, an electronic device may be a medical device (e.g., Magnetic Resonance Angiography (MRA) device, a Magnetic Resonance Imaging (MRI) device, Computed Tomography (CT) device, an imaging device, or an ultrasonic device), a navigation device, a Global Positioning System (GPS) receiver, an Event Data Recorder (EDR), a Flight Data Recorder (FDR), an automotive infotainment device, a naval electronic device (e.g., naval navigation device, gyroscope, or compass), an avionic electronic device, a security device, an industrial or consumer robot, and/or the like.

According to various embodiments of the present disclosure, an electronic device may be furniture, part of a building/structure, an electronic board, electronic signature receiving device, a projector, various measuring devices (e.g., water, electricity, gas or electro-magnetic wave measuring devices), and/or the like that include communication functionality.

According to various embodiments of the present disclosure, an electronic device may be any combination of the foregoing devices. In addition, it will be apparent to one having ordinary skill in the art that an electronic device according to various embodiments of the present disclosure is not limited to the foregoing devices.

Various embodiments of the present disclosurerelate to a method and a device for operating a lock screen of an electronic device provided with a touch screen. According to variousembodiments of the present disclosure, a user may input a user gesture with a preconfigured pattern for unlocking the lock screen in the electronic device in which the lock screen is configured. According to various embodiments of the present disclosure, the user gesture may represent a user input such as an operation in which a user makes a touch on a touch screen and then moves (or drags) the touch leftward or rightward in a state in whichthe user grasps the electronic device or in a state in which the electronic device is placed on the floor. When the user input is detected while the lock screen is configured, the electronic device may operate to output feedback (e.g., a vibration, a sound, lamp blinking, and/or the like) in response to the corresponding user input. According to various embodiments of the present disclosure, the lock screen may be operated using a direction of the user input and the number of feedback outputs provided in response to the user input, and the user may accordingly unlock the lock screen of the electronic device, without looking at the electronic device.

Hereinafter, a configuration of an electronic device according to variousembodiments of the present disclosure and an operating method thereof will be described with reference to the accompanying drawings. The configuration of the electronic device according to variousembodiments of the present disclosure and the operating method thereof are not restricted by or limited to content which will be described below and therefore, it should be noted that the content may be applied to various embodiments based on the various embodiments of the present disclosure which will be described below.

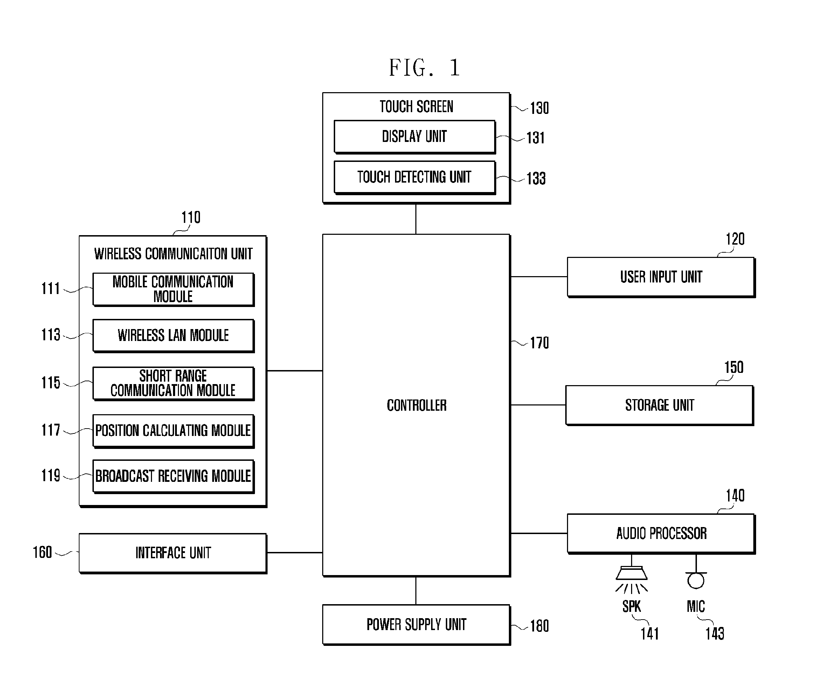

FIG. 1 is a block diagram schematically illustrating a configuration of an electronic device according to an embodiment of the present disclosure.

Referring to FIG. 1, the electronic device of the present disclosure may include a wireless communication unit 110, a user input unit 120, a touch screen 130, an audio processor 140, a storage unit 150, an interface unit 160, a controller 170, a power supply unit 180, and/or the like. According to various embodiments of the present disclosure, not all elements illustrated in FIG. 1 are indispensable and thus, the electronic device may be implemented with more or less elements than illustrated in FIG. 1. For example, when the electronic device according to variousembodiments of the present disclosure supports a photography function, the electronic device may further include a camera module. Furthermore, when the electronic device according to various embodiments of the present disclosure do not support broadcast receiving and reproducing functions, some modules (e.g., a broadcast receiving module 119 of the wireless communication unit 110) may be omitted.

The wireless communication unit 110 may include one or more modules enabling wireless communication between the electronic device and a wireless communication system or between the electronic device and another electronic device. For example, the wireless communication unit 110 may include a mobile communication module 111, a wireless Local Area Network (LAN) module 113, a short range communication module 115, a position calculating module 117, a broadcast receiving module 119, and/or the like.

The mobile communication module 111 may transmit/receive a wireless signal to/from at least one of a base station, an external mobile station, and various servers (e.g., an integration server, a provider server, a content server, an internet server, a cloud server, and/or the like) on a mobile communication network. The wireless signal may include a voice call signal, a video call signal, various types of data according to text/multimedia message transmission/reception, and/or the like.

The wireless LAN module 113 represents a module for establishing wireless internet access and a wireless LAN link with another electronic device, and may be embedded in or may be external to the electronic device. Wireless LAN (Wi-Fi), Wireless broadband (Wibro), World Interoperability for Microwave Access (WiMAX), High Speed Downlink Packet Access (HSDPA), and/or the like may be used as a wireless internet technology. The wireless LAN module 113 may transmit or receive various types of data (e.g., an image, a video, music, and/or the like) according to a user's selection to/from the another electronic device when the wireless LAN link is established with the another electronic device. The wireless LAN module 113 may always be maintained in a turned-on state or may be turned on according to a user's setting or input.

The short range communication module 115 represents a module for short range communication. As an example, Bluetooth, Bluetooth Low Energy (BLE), Radio Frequency Identification (RFID), Infrared Data Association (IrDA), Ultra Wideband (UWB), ZigBee, Near Field Communication (NFC), and/or the like may be used as a short range communication technology. Furthermore, the short range communication module 115 may transmit or receive various types of data (e.g., an image, a video, music, and/or the like) according to a user's selection to/from another electronic device when short range communication is established with the another electronic device. The short range communication module 115 may always be maintained in a turned-on state or may be turned on according to a user's setting or input.

The position calculating module 117 is a module for obtaining a position of the electronic device, and may include a Global Position System (GPS) module as a representative example thereof. The position calculating module 117 may calculate three dimensional information on a current position according to a latitude, a longitude, and an altitude, by calculating information on a distance away from three or more base stations and accurate time information, and then applying trigonometry to the calculated information. Alternatively, the position calculating module 117 may calculate position information by continuously receiving position information of the electronic device from three or more satellites in real time. The position information of the electronic device may be obtained by various methods.

The broadcast receiving module 119 may receive a broadcast signal (e.g., a TV broadcast signal, a radio broadcast signal, a data broadcast signal, and/or the like) and/or broadcast related information (e.g., information associated with a broadcast channel, a broadcast program, a broadcast service provider, and/or) from an external broadcast management server through a broadcast channel (e.g., a satellite broadcast channel, a terrestrial broadcast channel, and/or the like).

The user input unit 120 may generate input data for controlling an operation of the electronic device in response to a user input. The user input unit 120 may include a keypad, a dome switch, a touch pad (e.g., resistive type, capacitive type, and/or the like), a jog wheel, a jog switch, a sensor (e.g., a voice sensor, a proximity sensor, an illumination sensor, an acceleration sensor, a gyro sensor, and/or the like), and/or the like. Furthermore, the user input unit 120 may be implemented in a button form on an outside of the electronic device, and some buttons may also be implemented on a touch panel. The user input unit 120 may receive a user input for entering (activating) a lock screen unlocking mode and may generate an input signal according to the received user input.

The touch screen 130 is an input/output means for simultaneously performing an input function and a display function, and may include a display unit 131 and a touch detection unit 133. The touch screen 130 may display various screens (e.g., a standby screen, a messenger screen, a screen operated by the messenger, a screen for an outgoing call, a game screen, a gallery screen, and/or the like) according to operations of the electronic device through the display unit 131. When a user input (e.g., a touch, a tap, a drag, a flick, a sweep, a hovering event, and/or the like) is detected by the touch detecting unit 133 while a specific screen is being displayed through the display unit 131, the touch screen 130 may transfer an input signal according to the user input to the controller 170. The controller 170 may distinguish the user input and may control performance of a motion according to the user input. According to variousembodiments of the present disclosure, the touch screen 130 may receive a touch event for a user's text input while displaying a dialogue screen according to an operation of a messenger, and may display the corresponding text on the dialogue screen of the messenger, which is displayed through the display unit 131, under the control of the controller 170.

The display unit 131 may display (output) information processed by the electronic device. For example, when the electronic device is in a call mode, the display unit 131 may display a call related User Interface (UI) or Graphical User Interface (GUI). Furthermore, when the electronic device is in a video call mode or photography mode, the display unit 131 may display a photographed and/or received image, a UI, or a GUI. Moreover, the display unit 131 may display an execution screen of a messenger, and may display data transmitted/received between users for dialogue, namely, data input from the user to the messenger and data received from an outside to the messenger on the configured UI or GUI. In addition, when a lock screen is unlocked, the display unit 131 may display a standby screen or an execution screen of an application that is executed by a user before the lock screen is operated. Furthermore, the display unit 131 may support a display in a landscape or portrait mode depending on an orientation of the electronic device (or a direction in which the electronic device is placed) and a display conversion depending on an orientation change between the landscape and portrait modes.

The display unit 131 may include at least one of a Liquid Crystal Display (LCD), a Thin Film Transistor-LCD (TFT-LCD), a Light Emitting Diode (LED), an Organic LED (OLED), an Active Matrix OLED (AMOLED), a flexible display, a bended display, a 3D display, and/or the like. Some of the displays may be implemented as a transparent display configured with a transparent or photo-transparent type such that the outside can be viewed therethrough.

The touch detecting unit 133 may be positioned on the display unit 131, and may detect a user's touch event on a surface of the touch screen 130 (e.g., a tap, a drag, a sweep, a flick, a drag and drop, drawing, a single-touch, a multi-touch, a gesture (e.g., writing), and/or the like) or a user's hovering event occurring in a space over the touch screen 130. When detecting the user's touch event or hovering event through the touch screen 130, the touch detecting unit 133 may detect a coordinate where the touch event or hovering event is generated, and may transfer the detected coordinate to the controller 170. For example, the touch detecting unit 133 may detect the touch event or hovering event generated by the user and may generate a signal according to the detected touch event or hovering event to transmit the generated signal to the controller 170. The controller 170 may perform a function corresponding to an area at whichthe touch event or hovering event is generated, by the signal transferred from the touch detecting unit 133.

The touch detecting unit 133 may receive a user input and may generate an input signal according to the received user input while a lock screen unlocking mode is activated. For example, the electronic device may change to the lock screen unlocking mode and drive the touch detecting unit 133, by activating the lock screen unlocking mode according to the user input for unlocking the lock screen in the lock screen state. According to various embodiments of the present disclosure, in the lock screen unlocking mode, the touch detecting unit 133 may receive an input of a touch event according to a preconfigured pattern for unlocking the lock screen, and may generate an input signal according to the input touch event.

The touch detecting unit 133 may be configured to convert a change in a pressure applied to a specific portion of the display unit 131 or a change in an electrostatic capacity generated at a specific portion of the display unit 131 into an electric input signal. The touch detecting unit 133 may be configured to detect a touch pressure according to an applied touch method as well as a touched position and a touched area. When a touch input for the touch detecting unit 133 is input, a signal (signals) corresponding to the touch input may be transferred to a touch controller (not illustrated). The touch controller (not illustrated) may process the signal (signals), and then may transmit corresponding data to the controller 170. The controller 170 may identify which area of the touch screen 130 is touched. For example, the controller 170 may determine the area at which the touch input is input to the touch screen 130.

The audio processor 140 may perform a function of transmitting an audio signal input from the controller 170 to a Speaker (SPK) 141 and a function of transferring an audio signal such as a voice input from a Microphone (MIC) 143 to the controller 170. The audio processor 140 may convert voice/sound data into an audible sound to output the audible sound through the speaker 141 under control of the controller 170, and may convert an audio signal such as a voice received from the microphone 143 into a digital signal to transfer the digital signal to the controller 170.

The speaker 141 may output audio data received from the wireless communication unit 110 or stored in the storage unit 150, in a lock screen unlocking mode, a messenger mode, a call mode, a message mode, a voice (video) recording mode, a voice recognition mode, a broadcast reception mode, and a media content (e.g., a music file, a video file, and/or the like) reproduction mode. The speaker 141 may also output sound signals related to functions performed by the electronic device (e.g., a function of executing a messenger, functions of sending and receiving a dialogue, a function of displaying a content image, a function of executing a content image related function, functions of sending and receiving a call connection, a photography function, a function of reproducing a media content file, and/or the like).

The microphone 143 may receive an external sound signal to process the external sound signal into an electric voice data in a messenger mode, a call mode, a message mode, a voice (video) recording mode, a voice recognition mode, and/or the like. In the case of the call mode, the processed voice data may be converted into a format that can be transmitted to a mobile communication base station, and then may be output through the mobile communication module 111. Various noise removal algorithms for removing noise generated in a process of receiving the external sound signal may be implemented for the microphone 143.

The storage unit 150 may store programs for processing and control of the controller 170, and may perform a function of storing input/output data (e.g., messenger data (dialogue data), content images, contact information, messages, media content (e.g., an audio, a video, and an image), and/or the like). The storage unit 150 may store a usage frequency (e.g., a usage frequency of applications, a usage frequency of attributes for each application, a usage frequency of content, and the like), an importance value, and a priority according to operating functions of the user device. The storage unit 150 may also store various patterns of vibration and sound data output in response to a touch input on the touch screen 130. According to various embodiments of the present disclosure, the storage unit 150 may store lock screen operating information configured in advance by a user for unlocking a lock screen. The lock screen operating information may include pattern information of a pattern (password) corresponding to a user gesture for unlocking a lock screen, feedback information provided in response to a user input, time information of a threshold time interval for providing feedback in response to a user input, mode configuration information for operating a lock screen (e.g., a left-right mode, and an up-down mode), and/or the like.

The pattern information may include information related to a password (a pattern) (e.g., leftward (3) - rightward (1) - leftward (2)) according to a gesture (e.g., a touch, a drag, a hold, or the like) configured by a user. The time information may include information related to a period in which feedback is provided in response to a user input.For example, the time information may include a time interval for which the user input remains in a specific area (e.g., 1 sec, 2 sec, 3 sec, and/or the like). The feedback information may include a feedback method (e.g., a vibration, a sound, and lamp blinking) provided in response to a user input and an output type of the feedback (e.g., an intensity of a vibration, a type of sound, a blinking speed of a lamp, and/or the like). The mode configuration information may be included in the pattern information, and may include at least one of left-right mode configuration information for distinguishing a right-hand input from a left-hand input and up-down mode configuration information for distinguishing an input according to a forward direction state from an input according to a reverse direction state.

The storage unit 150 may continuously or temporarily store an Operating System (OS) of the user device, programs related to input and display control operations using the touch screen 130, programs related to lock screen operating and unlocking control operations, data generated by an operation of the programs, and/or the like.

The storage unit 150 may include at least one type of storage medium among a flash memory type memory, a hard disk type memory, a micro type memory, a card type memory (e.g., a Secure Digital (SD) card or an eXtream Digital (XD) card), a Dynamic Random Access Memory (DRAM) type memory, a Static RAM (SRAM) type memory, a Read-Only Memory (ROM) type memory, a Programmable ROM (PROM) type memory, an Electrically Erasable PROM (EEPROM) type memory, a Magnetic RAM (MRAM) type memory, a magnetic disk type memory, an optical disk type memory, and/or the like. The electronic device may also operate in relation to a web storage performing a storage function of the storage unit 150 on the Internet.

The interface unit 160 may serve as an interface (e.g., a passage) between the electronic device and all external devices connected to the electronic device. The interface unit 160 may transfer data transmitted or power supplied from an external device to respective elements within the electronic device, and/or may allow data within the electronic device to be transmitted to an external device. For example, the interface unit 160 may include a wired/wireless headset port, an external charger port, a wired/wireless data port, a memory card port, a port for a connection of a device provided with an identification module, an audio input/output port, a video input/output port, an earphone port, and/or the like.

The controller 170 may control an overall operation of the electronic device. For example, the controller 170 may perform a control related to voice communication, data communication, video communication, and/or the like. The controller 170 may process operations related to a lock screen of the electronic device, and may also be provided with a data processing module (not illustrated) for processing the action.

When a user input is received through the touch screen 130 while the electronic device is operating a lock screen function (e.g., the electronic device is in a lock screen mode), the controller 170 may control preconfigured feedback to be provided in response to the user input. The controller 170 may compare input information according to the user input with preconfigured pattern information, and may control operations related to a lock screen according to whether the input information accords with (e.g., corresponds to or otherwise is statistically equal to) the pattern information. Furthermore, the controller 170 may control an operation of activating a lock screen unlocking mode in response to a user's request while the lock screen function is being operated, an operation of receiving the user input in the lock screen unlocking mode, an operation of comparing the input information with the pattern information when the user input is released, an operation of outputting feedback every time a preconfigured threshold time interval elapses while the user input is maintained in an area at whichthe user input has been input, an operation of outputting feedback while the user input is being moved, and/or the like.

According to various embodiments of the present disclosure, the controller 170 may generate pattern information and feedback information for unlocking a lock screen according to a user input through a lock screen function. The controller 170 may enter a lock screen unlocking mode in response to a user input for unlocking the lock screen (e.g., an input configured in advance for entering (activating) the lock screen unlocking mode (e.g., shaking the electronic device, an input of a function key allocated in advance for an entrance to the lock screen unlocking mode, an input by the user input unit 120 for turning on the touch screen 130)) in the electronic device in which the lock screen is configured. The controller 170 may operate such that configured feedback is provided (output) in response to a user input (e.g., a user gesture input according to a configured pattern) in the lock screen unlocking mode. The controller 170 may store input information in response to a user input in the lock screen unlocking mode. When a user input is released in the lock screen unlocking mode, the controller 170 may compare input information stored according to the user input with the preconfigured pattern information. When the input information accords with (e.g., corresponds to or otherwise is statistically equal to) the pattern information, the controller 170 may unlock the lock screen and may operate such that related functions are performed.

Such a detailed control operation of the controller 170 will be described in an example of an operation of the electronic device and a control method thereof with reference to drawings as will be illustrated below.

According to various embodiments of the presnet disclsoure, the controller 170 may control various operations related to a general function of the electronic device in addition to the aforementioned functions. For example, when a specific application is executed, the controller 170 may control an operation and displaying of a screen for the specific application. Furthermore, the controller 170 may receive input signals corresponding to various user inputs supported by a touch-based input interface (e.g., the touch screen 130) and may control an operation of functions according to the received input signals. Moreover, the controller 170 may also control data transmission/reception based on wired communication or wireless communication.

The power supply unit 180 may receive external power and internal power, and may supply power required for an operation of the elements under the control of the controller 170.

The aforementioned electronic device according to various embodiments of the present disclosure may include all devices using an Application Processor (AP), a Graphic Processing unit (GPU), and a Central Processing Unit (CPU), such as all information communication devices, all multimedia devices, and all application devices thereof, which support the functions of various embodiments of the present disclosure. In addition, function control methods according to the various embodiments of the present disclosuremay also be applied to various display devices such as a laptop computer (e.g., a notebook computer), a digital television, a Digital Signage (DS), a Large Format Display (LFD) and the like.

Various embodiments of the present disclosuremay be implemented in a recording medium, which can be read through a computer or a similar device, by using software, hardware, or a combination thereof. According to the hardware implementation, the embodiments of the present disclosure may be implemented using at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro-processors, and electrical units for performing other functions.

The recording medium may include a computer readable recording medium storing programs for performing an operation of receiving a user input while a lock screen function is being operated, an operation of providing preconfigured feedback in response to the user input, an operation of comparing input information according to the user input with preconfigured pattern information and determining whether the input information accords with (e.g., corresponds to or otherwise is statistically equal to) the pattern information, and an operation of operating the lock screen according to whether the input information accords with (e.g., corresponds to or otherwise is statistically equal to) the pattern information.

Furthermore, the recording medium may include a non-transitory computer readable recording medium storing programs for performing an operation of activating a lock screen unlocking mode in response to a user's request while the lock screen function is being operated, an operation of receiving the user input in the lock screen unlocking mode, an operation of comparing the input information with the pattern information when the user input is released, an operation of outputting feedback every time the preconfigured threshold time interval elapses while the user input is maintained in an area in whichthe user input has been input, and an operation of outputting feedback while the user input is being moved.

In some cases, variousembodiments described in the present specification may be implemented by the controller 180 in itself. According to the software implementation, variousembodiments of the present disclosure such as procedures and functions described in the present specification may also be implemented as separate software modules. The software modules may perform one or more functions and operations described in the present specification.

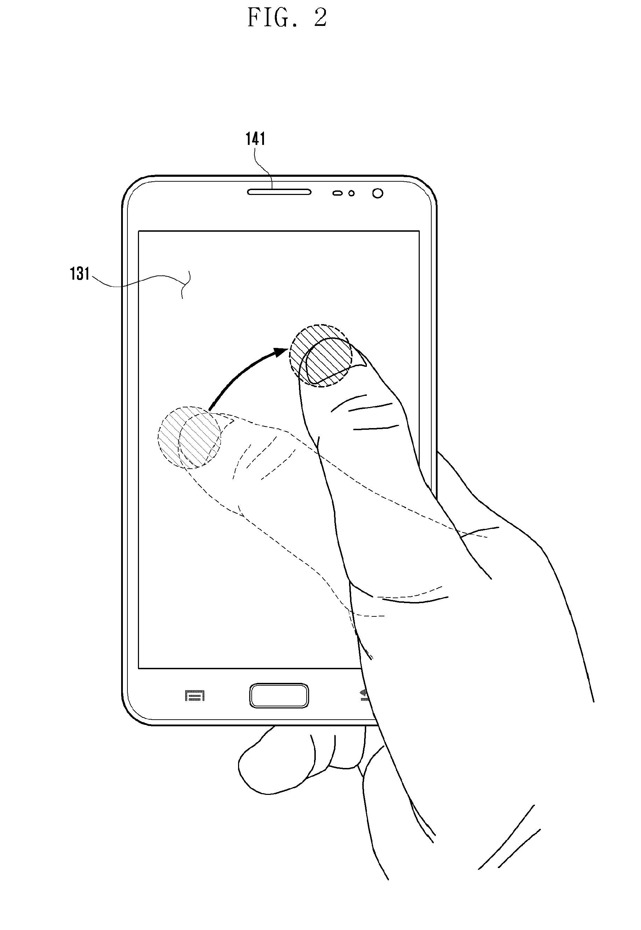

FIGS. 2, 3, 4, and 5 illustrate examples of operating a lock screen in an electronic device according to an embodiment of the present disclosure.

Referring to FIGS. 2, 3, 4, and 5, examples are illustrated in which a user input is performed to correspond to a pattern configured for unlocking of a lock screen while the electronic device is operating a lock screen function.

As illustrated in FIGS. 2, 3, 4, and 5, according to variousembodiments of the present disclosure, the electronic device may receive a user input irrespective of a forward or reverse direction state of the electronic device and a left or right hand of a user, and may operate a lock screen by detecting a pattern according to the received user input. According to various embodiments of the present disclosure, the forward direction state of the electronic device may correspond to a state in which a display unit 131 of the electronic device is in an upright position (e.g., a speaker 141 is diposed at an upper part thereof and a microphone 143 is disposed at a lwoer part thereof) when viewed from the front thereof by a user. Furthermore, according to various embodiments of the present disclosure, the reverse direction state of the electronic device may correspond to a state in which the display unit 131 of the electronic device is placed opposite to the display unit in the forward direction state, namely, the display unit 131 of the forward direction state is upside down.

According to variousembodiments of the present disclosure, when an interrupt is detected while the lock screen is configured such that the electronic device is in a standby mode, the electronic device may enter a lock screen unlocking mode. According to various embodiments of the present disclosure, the configured interrupt may represent an interrupt for entering the lock screen unlocking mode in which a user input for unlocking the lock screen may be received while the lock screen function is being executed in the standby mode. Such an interrupt may include an input by a specific function key of the user input unit 120 (e.g., a power key, or an on/off key for the display unit 131) which is allocated for entrance to the lock screen unlocking mode, a change in the state of the electronic device which is configured for entrance to the lock screen unlocking mode (e.g., an input which may be detected through a motion sensor, an acceleration sensor, a geo-magnetic sensor, or the like of the electronic device), and/or the like. The interrupt may be associated with an audio input that is input to the microphone 143, and/or the like.

The electronic device may stand ready for a user input for a predetermined period of time while being in the lock screen unlocking mode according to the interrupt. When the user input is detected within the predetermined period of time, the electronic device may recognize an initial area at whichthe user input is first detected, and may continuously trace a change in the user input with respect to the initial area. According to variousembodiments of the present disclosure, the electronic device may determine a direction of the user input according to the change in a position of the user input initiated from the initial area (e.g., a leftward (or lower-leftward, upper-rightward) movement, a rightward (or lower-rightward, upper-leftward) movement, and/or the like).

The electronic device may trace the user input for unlocking the lock screen in response to a series of operations such as outputting feedback according to a time interval for which the user input remains after moving from the initial area to another area in one direction and outputting feedback according to a time interval for which the user input remains after moving from the another area to another area in another direction. Furthermore, the electronic device may record and manage the direction according to the change of the user input and the number of output feedback in the specific areas at whichthe user input moves, and may generate input information according to the user input based on the recorded and managed information when the user input is released. Thereafter, the electronic device may compare the generated input information with preconfigured pattern information for unlocking the lock screen, and may operate to unlock the lock screen when the input information accords with (e.g., corresponds to or otherwise is statistically equal to) the pattern information.

As described above, according to variousembodiments of the present disclosure, the electronic device may accurately recognize the pattern according to the user input even when the electronic device is upside down, using the direction of the areas to which the user input moves with respect to the initial area at whichthe user input is initiated. According to variousembodiments of the present disclousre, the electronic device may recognize a user input which is input from left to right in the forward direction state thereof and a user input which is input from left to right in the reverse direction state thereof as an identical pattern.

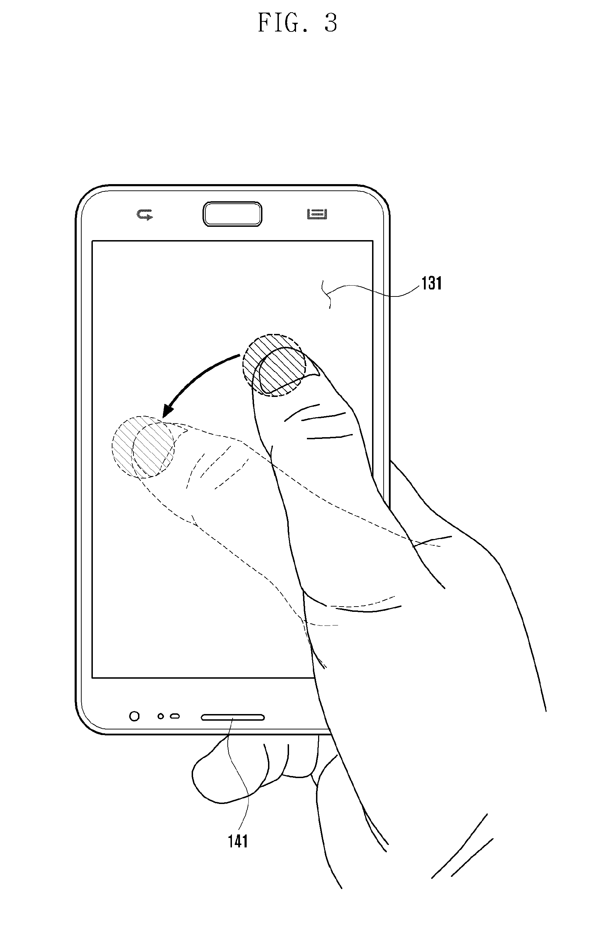

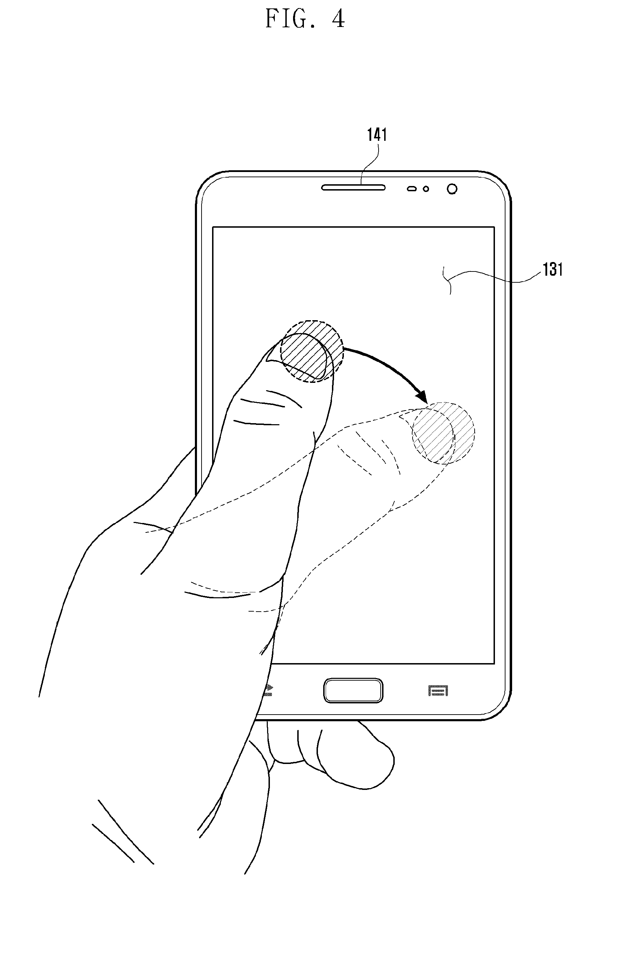

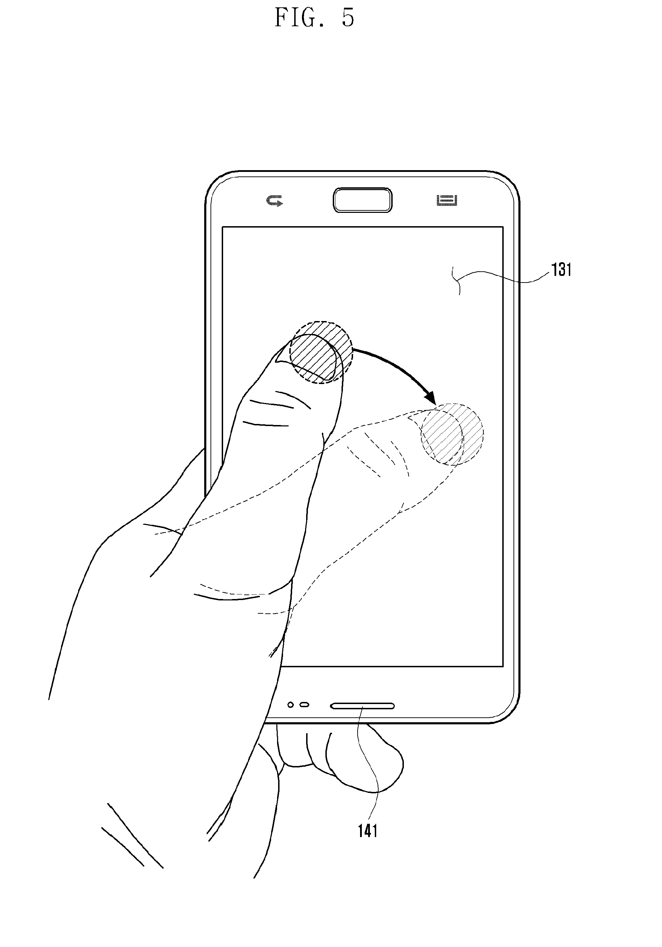

Accordingly, referring to FIGS. 2, 3, 4, and 5, the user may input a user gesture according to the remembered pattern (e.g., rightward (3) - leftward (1) - rightward (2)) irrespective of the state in which the electronic device is placed (e.g., the forward direction state (as illustrated in FIGS. 2 and 4) or the reverse direction state (as illustrated in FIGS. 3 and 5)) and the state in which the user can perform the user input (e.g., right-hand (as illustrated in FIGS. 2 and 3) or left-hand (as illustrated FIGS. 4 and 5)) while the lock screen of the electronic device is configured. Namely, without looking at the electronic device, the user may more conveniently operate the lock screen through the direction of the user input pattern and the feedback of the electronic device (e.g., the number of vibrations) in response to the direction.

Meanwhile, user inputs moving along specific traces are illustrated in FIGS. 2,3, 4, and 5. For example, the user input may have an upper-rightward trace in a case of the right-hand input as illustrated in FIG. 2, a lower-leftward trace in a case of the right-hand input as illustrated in FIG. 3, a lower-rightward trace in a case of the left-hand input as illustrated in FIG. 4, or an upper-leftward trace in a case of the left-hand input as illustrated in FIG. 5. However, according to various embodiments of the present disclosure, the user input may also linearly move according to a state of grasping the electronic device or a state in which the electronic device is placed. According to variousembodiments of the present disclosure, the user input may also be input through a linear movement having a direction such as a rightward, leftward, upward, downward, or diagonal direction.

Meanwhile, according to various embodiments of the present disclosure, the electronic device generates the input information for unlocking the lock screen in response to the user input having a leftward or rightward direction, while the electronic device is in the forward or reverse direction state as illustrated in FIGS. 2 to 5. However, various embodiments of the present disclosure are not limited thereto, and according to variousembodiments of the present disclosure, the electronic device may also generate input information for unlocking the lock screen in response to a user input having an upward and downward direction or a user input having upward, downward, leftward, and rightward direction. Namely, according to various embodiments of the present disclosure, the input information according to the user input for unlocking the lock screen may be generated based on at least one pattern corresponding to the direction of the user input (e.g., upward, downward, leftward, or rightward) and the number of feedback outputs for the user input (e.g., zero, once, twice, three times, and/or the like).

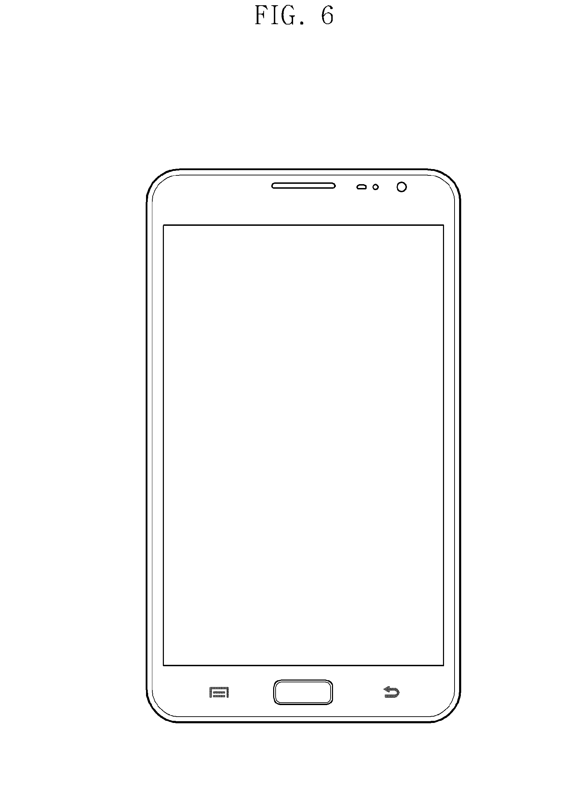

FIGS. 6, 7, 8, 9, 10, 11, and 12 illustrate examples of an operation for unlocking a lock screen in an electronic device according to an embodiment of the present disclosure.

Referring to FIGS. 6, 7, 8, 9, 10, 11, and 12, a user performs an operation for unlocking a lock screen, while holding the electronic device in a forward direction state. Furthermore, according to the various embodiments illustrated in FIGS. 6,7, 8, 9, 10, 11, and 12, i pattern information capable of unlocking the lock screen of the electronic device may be assumed to be configured as a pattern in which a user is provided with feedback three times after moving a user input rightward and then, is provided with feedback twice after moving the user input leftward (rightward (3) - leftward (2)).

According to variousembodiments of the present disclosure, the user may make a touch on a touch screen 130 and thereafter, may move (e.g., drag) the touch rightward according to the preconfigured pattern information (e.g., rightward (3) - leftward (2)), while holding the electronic device. Then, the electronic device may determine a direction of the user input as "rightward", and may output feedback (e.g., a vibration, a sound, lamp blinking, and/or the like) according to a configured period in the area where the touch is moved. The user may determine the number of feedback outputs from the electronic device after moving the touch first input to one area of the touch screen 130, and may stand ready for three feedback outputs according to the preconfigured pattern information (e.g., rightward (3)).

If the user receives vibration feedback three times while maintaining the first input touch after moving the touch rightward according to the preconfigured pattern information (e.g., rightward (3) - leftward (2)), the user may further move the touch leftward. Then, the electronic device may determine a direction of the user input as "leftward", and may output feedback (e.g., a vibration, a sound, lamp blinking, and/or the like) according to a configured period in the area where the touch is moved. The user may determine the number of feedback outputs from the electronic device after moving the touch, and may stand ready for the two feedback outputs according to the preconfigured pattern information (e.g., leftward (2)).

If the user receives vibration feedback twice while maintaining the touch after moving the touch leftward, the user may release the touch. Namely, if the user input corresponding to the preconfigured pattern information (e.g., rightward (3) - leftward (2)) is completed, the user may release the user input, and the electronic device may accordingly generate input information for unlocking the lock screen. The electronic device may recognize the pattern (input information) according to the change of the user input to store the recognized pattern in a storage unit 150, and may determine whether the lock screen is to be unlocked when the user input is released, by comparing the pattern stored according to the user input with the preconfigured pattern information.

Referring to FIGS. 6, 7, 8, 9, 10, 11, and 12, an example of a screen of the electronic device while a lock screen function is being operated in a standby mode is illustrated in FIG. 6. According to variousembodiments of the present disclosure, a user may change the electronic device to a lock screen unlocking mode in which a user input can be performed for unlocking the lock screen while the lock screen function of the electronic device is being operated as illustrated in FIG. 6. For example, the user may perform an input configured in advance for changing to the lock screen unlocking mode (e.g., shaking the electronic device, an input of a function key allocated in advance for entrance to the lock screen unlocking mode, providing a voice input, and/or the like).

When the user input for entrance to the lock screen unlocking mode is detected in such a state as illustrated in FIG. 6, the electronic device may activate the lock screen unlocking mode to receive the user input through the touch screen 130 in response to the user input. At this time, the electronic device may maintain the display unit 131 in the turned off state even in the case of activating the lock screen unlocking mode. However, various embodiments of the present disclosure are not limited thereto, and the electronic device may display a guide screen or a screen with a configured image according to a user configuration when entering the lock screen unlocking mode.

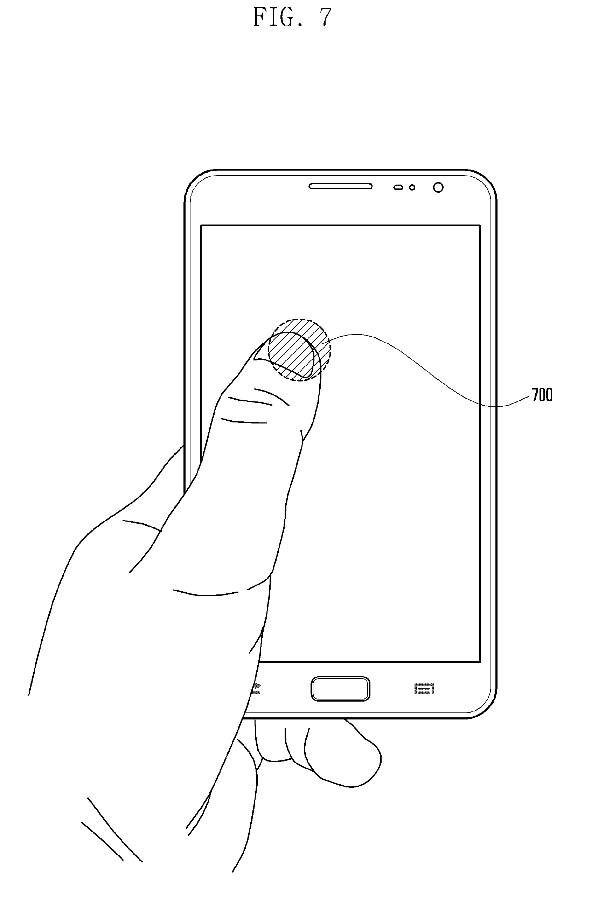

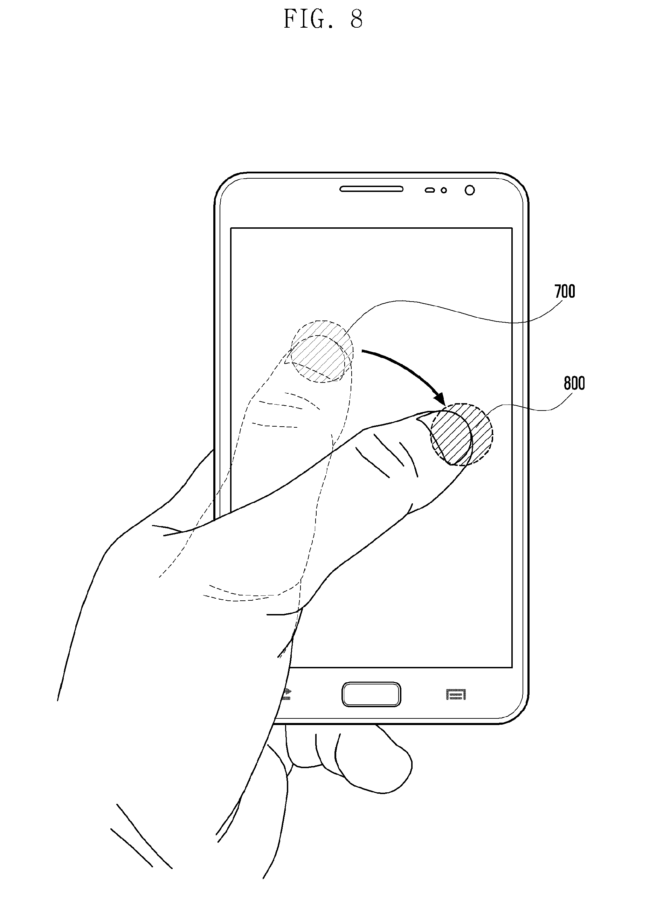

Meanwhile, the user may change the electronic device to the lock screen unlocking mode while holding the electronic device with the user's left-hand or right-hand, and may make a touch on one area 700 (e.g., an initial area) of the touch screen 130 according to a preconfigured pattern irrespective of the forward or reverse direction state of the electronic device as illustrated in FIG. 7. While touching the initial area 700 as illustrated in FIG. 7, the user may move the touch rightward to a first area 800 and thereafter stand by for a predetermined period of time as illustrated in FIG. 8.

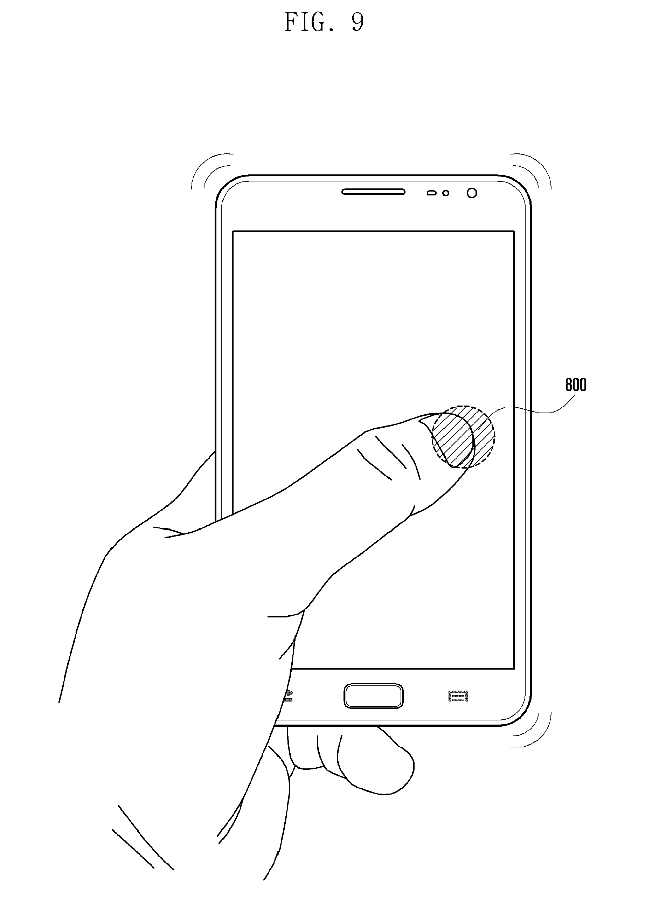

Then, the electronic device may detect the touch by the user input moving from the initial area 700 to the first area 800, and may identify the direction in which the touch moves (e.g., the rightward direction) and the first area 800 to whichthe touch moves and stands by (e.g., the touch is maintained). When the touch stops in the first area 800, the electronic device may count time and provide the configured feedback (e.g., a vibration, a sound, lamp blinking, and/or the like) at every preconfigured period (e.g., 1 sec) as illustrated in FIG. 9 while the touch is being maintained. According to variousembodiments of the present disclosure, the user may maintain the touch on the first area 800 until the user receives feedback three times according to a preconfigured pattern (e.g., rightward (3) - leftward (2)). Accordingly, the electronic device may generate a vibration at every second, and may generate a vibration three times for 3 seconds (e.g., a vibration after 1 sec - a vibration after 2 sec - a vibration after 3 sec).

According to various embodiments of the present disclosure,the electronic device outputs the feedback every time a preconfigured threshold time interval elapses while the touch according to the user input is maintained in the first area 800 after being moved from the initial area 700 to the first area 800. However, various embodiments of the present disclosure are not limited thereto, and the feedback in response to the user input may be provided through various methods. According to variousembodiments of the present disclsoure, the feedback may also be provided even while the touch according to the user input is being moved (e.g., dragged) from the initial area 700 to the first area 800.

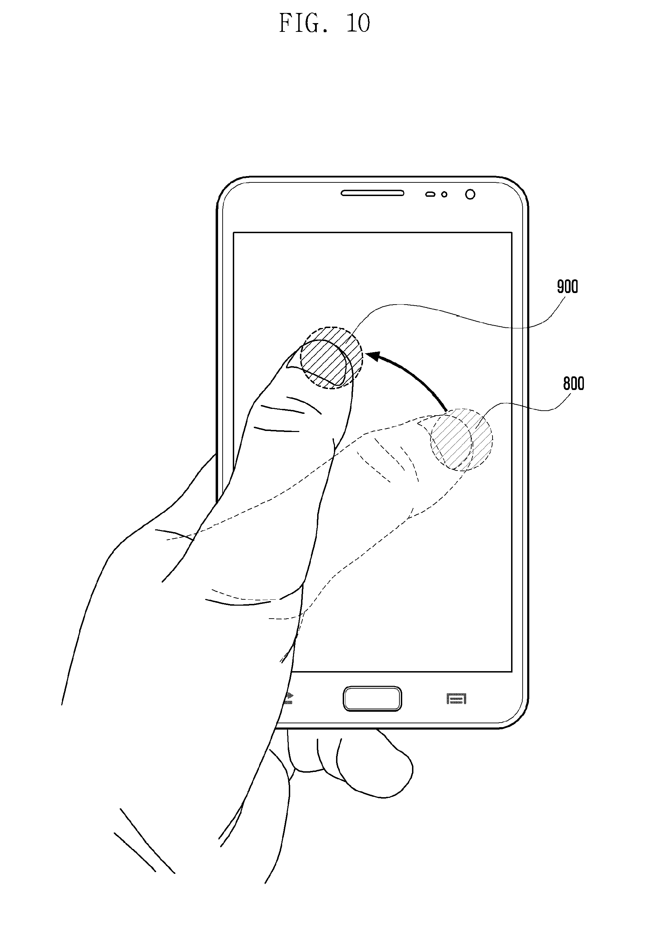

When the user receives the feedback three times while the first touch input to the initial area 700 is located in the first area 800 after being moved rightward as illustrated in FIGS. 7, 8, and 9, the user may move the touch leftward from the first area 800 to a second area 900 and thereafter stand by for a predetermined period of time as illustrated in FIG. 10. When detecting the change of the touch by the user input (e.g., the movement from the first area 800 to the second area 900), the electronic device may record pattern 1, namely, the direction (e.g., rightward direction) in which the touch moves from the initial area 700 to the first area 800 and the number of the feedback outputs (e.g., three times).

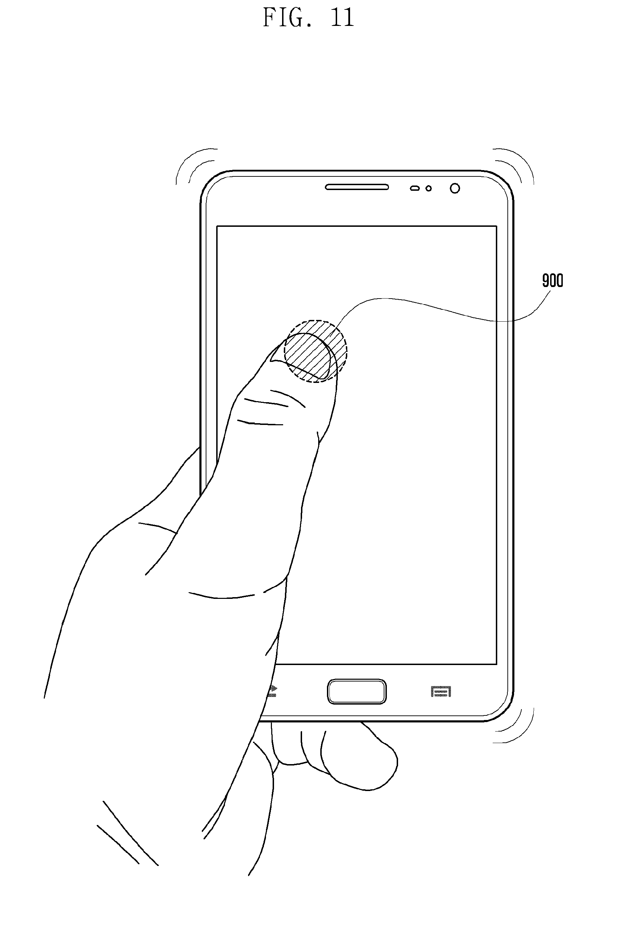

Then, the electronic device may detect the touch by the user input moving from the first area 800 to the second area 900, and may identify the direction in which the touch moves (e.g., the leftward direction) and the second area 900 to whichthe touch moves and stands by (e.g., the touch is maintained). When the touch stops in the second area 900, the electronic device may count time and provide the configured feedback (e.g., a vibration, a sound, lamp blinking, and/or the like) at every preconfigured period (e.g., 1 sec) as illustrated in FIG. 11 while the touch is being maintained. According to variousembodiments of the present disclosure, the user may maintain the touch on the second area 900 until the user receives the feedback two times according to the preconfigured pattern (e.g., rightward (3) - leftward (2)). Accordingly, the electronic device may generate a vibration at every second, and may generate a vibration two times for 2 seconds (e.g., a vibration after 1 sec - a vibration after 2 sec).

When the user receives the feedback two times while the touch input to the first area 800 is located in the second area 900 after being moved leftward as illustrated in FIGS. 9,10, and 11, the user may release the touch from the second area 900. When detecting the change of the touch by the user input (e.g., the release of the touch from the second area 900), the electronic device may record pattern 2, namely, the direction (e.g., leftward direction) in which the touch moves from the first area 800 to the second area 900 and the number of the feedback outputs (e.g., two times). At this time, the electronic device may manage both previously recorded pattern 1 and currently recorded pattern 2.

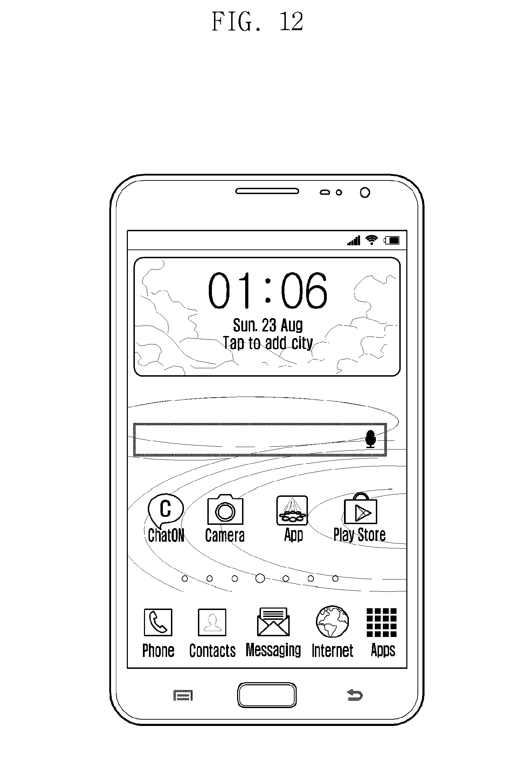

The electronic device may combine pattern 1 and pattern 2 to generate input information in response to the release of the touch according to the user input, and may compare the generated input information with the preconfigured pattern information. For example, the electronic device may sequentially compare the directions of at least one user input and the number of feedback outputs according to the input information with at least one direction and the number of feedback outputs according to the pattern information. When the input information generated by the user input accords with (e.g., corresponds to or otherwise is statistically equal to) the preconfigured pattern information, the electronic device may unlock the lock screen in the lock screen unlocking mode. In addition, as illustrated in FIG. 12, the electronic device may display a standby screen or an execution screen of an application, which is executed by the user before the lock screen is operated, in response to the unlocking of the lock screen.

Meanwhile, FIGS. 6, 7, 8, 9, 10, 11, and 12 illustrate an example in which the preconfigured pattern information corresponds to "rightward (3) - leftward (2)". However, various embodiments of the present disclosure are not limited thereto.According to various embodiments of the present disclosure, the user may configure the pattern information through various methods (e.g., security enhancement through more patterns, up-down input method but not the left-right input method, or an input method through a combination of up, down, left and right). According to variousembodiments of the present disclosure, assuming that the preconfigured pattern information is configured as "rightward (3) - leftward (2) - rightward (3)", when the user receives feedback two times while the touch input to the first area 800 is located in the second area 900 after being moved leftward, the user may move the touch in the second area 900 rightward to a third area and thereafter stand by for a predetermined period of time. When the user receives feedback three times in the third area, the user may input information for unlocking the lock screen (e.g., rightward (3) - leftward (2) - rightward (3)) by releasing the touch from the third area. Furthermore, in correspondence to the aforementioned methods illustrated in FIGS. 6,7, 8, 9, 10, 11, and 12, pattern information may also be configured as an up-down method such as "upward (2) - downward (3) - upward (1)" or a method by a combination of up, down, left, and right such as "upward (2) - leftward (3) - rightward (1) - downward (5)".

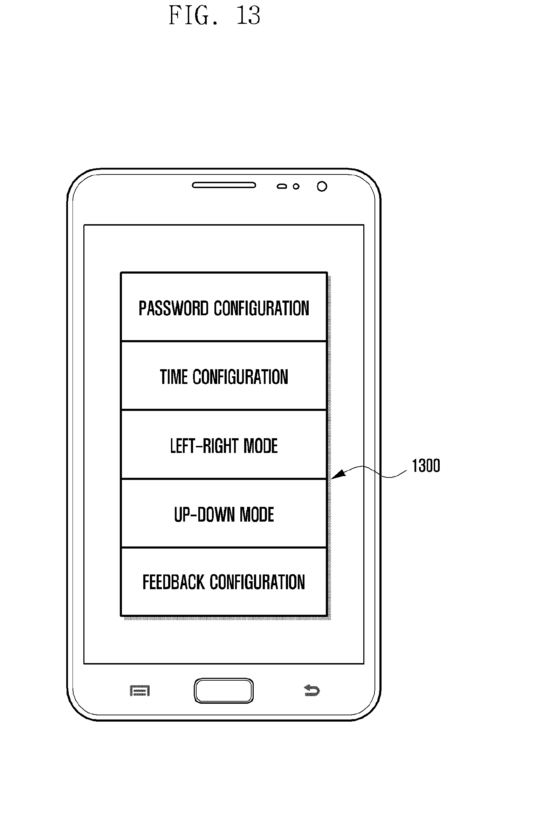

FIG. 13 illustrates an example of a user interface for operating a lock screen in an electronic device according to an embodiment of the present disclosure.

Referring to FIG. 13, an example of the user interface provided for operating a lock screen function in the electronic device according to variousembodiments of the present disclosure is illustrated in FIG. 13. A user may manipulate the electronic device through a configuration menu thereof such that the electronic device may change to a configuration mode for configuring operations related to a lock screen and may display a screen of the configuration mode. The electronic device may display a pattern configuration menu 1300 in response to the user input as illustrated in FIG. 13.

According to variousembodiments of the present disclosure, the pattern configuration menu 1300 may include options such as password configuration, time configuration, left-right mode, up-down mode, feedback configuration, and/or the like.

According to various embodiments of the present disclosure, through the password configuration option, a pattern (e.g., rightward (3) - leftward (2)) for unlocking the lock screen may be recognized and configured as in the aforementioned examples.

According to various embodiments of the present disclosure, through the time configuration option, a threshold time interval (e.g., 1 sec, 2 sec, 3 sec, or the like) may be configured for outputting feedback in an area at whicha user input is detected. Namely, the feedback may be provided when the user input is maintained in a specific area for the threshold time interval and every time the threshold time interval lapses while the user input is maintained in the specific area. Furthermore, the feedback may be omitted when the user input is moved from the specific area to another area before the threshold time interval elapses.

According to various embodiments of the present disclosure, through the left-right mode option, the lock screen function of the electronic device may be configured to differently operate in left and right modes. According to variousembodiments of the present disclosure, it was exemplified in the aforementioned operation examples that the lock screen function is operated by the direction in which the user input moves and the number of feedback outputs in response to the user input without distinguishing a user input entered by using the user's left-hand or right-hand. However, when the left-right mode option is configured by a user, the lock screen function may be operated by distinguishing the user input entered by the user's left-hand or right-hand. Thus, the user may configure a left-right mode operation in the left-right mode option, and may configure a left-hand or right-hand mode for a specific pattern (e.g., leftward (3) - rightward (2)) when configuring the left-right mode operation. Accordingly, for a user input with a correct pattern (e.g., leftward (3) - rightward (2)), the electronic device may also determine the unlocking of the lock screen by distinguishing whether the corresponding user input is input by the user's left-hand or right-hand.

According to various embodiments of the present disclosure, distinguishing between left-hand and right-hand modes of the user input may be diversely implemented. According to variousembodiments of the present disclosure, a user generally manipulates a touch using a thumb while holding the electronic device with one hand. Thus, with this in mind, a right-hand input and a left-hand input may be distinguished from each other using a height difference between an area where a user input is first input while the electronic device is maintained in an upright position (e.g., the forward direction state) and an area at whichthe user input moves.

As an example, when a user drags a touch rightward using a thumb of a right-hand while grasping the electronic device in the forward (e.g., or reverse) direction state with the right-hand as in the above-described example of FIG. 2, a location (e.g., coordinate) of an area at whichthe touch is completely dragged is above a location (e.g., coordinate) of an area at whichthe touch is first input. Furthermore, when a user drags a touch leftward using a thumb of a right-hand while grasping the electronic device in the forward (or reverse) direction state with the right-hand as in the above-described example of FIG. 3, a location (e.g., coordinate) of an area at whichthe touch is completely dragged is below a location (e.g., coordinate) of an area at whichthe touch is first input. When a trace according to the user input is drawn, the rightward drag may have a trace moving in an upper-rightward direction with respect to the first touched area, and the leftward drag may have a trace moving in a lower-leftward direction with respect to the first touched area. Accordingly, the electronic device may recognize the change of the trace to identify that the user input has been input by the right-hand.

In contrast, when a user drags a touch rightward using a thumb of a left-hand while grasping the electronic device in the forward (e.g., or reverse) direction state with the left-hand as in the above-described example of FIG. 4, a location (e.g., coordinate) of an area at whichthe touch is completely dragged is below a location (e.g., coordinate) of an area at whichthe touch is first input. Furthermore, when a user drags a touch leftward using a thumb of a left-hand while holding the electronic device in the forward (e.g., or reverse) direction state with the left-hand as in the above-described example of FIG. 5, a location (e.g., coordinate) of an area at whichthe touch is completely dragged is above a location (e.g., coordinate) of an area at whichthe touch is first input. When a trace according to the user input is drawn, the rightward drag may have a trace moving in a lower-rightward direction with respect to the first touched area, and the leftward drag may have a trace moving in an upper-leftward direction with respect to the first touched area. Accordingly, the electronic device may recognize the change of the trace to identify that the user input has been input by the left-hand.

Furthermore, according to variousembodiments of the present disclosure, the electronic device may be provided at an external bezel portion thereof with a sensor (e.g., a pressure sensor) capable of detecting a state in which a user holds the electronic device, and a left-hand input and a right-hand input may also be distinguished from each other by detecting the user's holding state using the sensor.

According to various embodiments of the present disclosure, through the up-down mode option, the lock screen function of the electronic device may be configured to differently operate in up and down modes. According to various embodiments of the present disclosure, it was exemplified in the aforementioned operation examples that the lock screen function is operated by the direction in which the user input moves and the number of feedback outputs in response to the user input without distinguishing a user input in the forward direction state from a user input in the reverse direction state. However, when the up-down mode option is configured by a user, the lock screen function may be operated by distinguishing the user input in the forward direction state from the user input in the reverse direction state. Thus, the user may configure an up-down mode operation in the up-down mode option, and may configure a forward or reverse direction mode for a specific pattern (e.g., leftward (3) - rightward (2)) when configuring the up-down mode operation. Accordingly, for a user input with a correct pattern (e.g., leftward (3) - rightward (2)), the electronic device may also determine the unlocking of the lock screen by distinguishing whether the corresponding user input is an input in the forward direction state or an input in the reverse direction state.

Through the feedback configuration option, a method of feedback to be provided in response to the user input and an output type of corresponding feedback may be configured. The feedback method may be configured as one or a combination of at least two of a vibration, a sound, lamp blinking, and/or the like. The type of feedback output may include an intensity of a vibration, duration time of a vibration, a type of sound, a blinking speed of a lamp, a lamp color, and/or the like, and one or more types may be configured according to a configured feedback method.

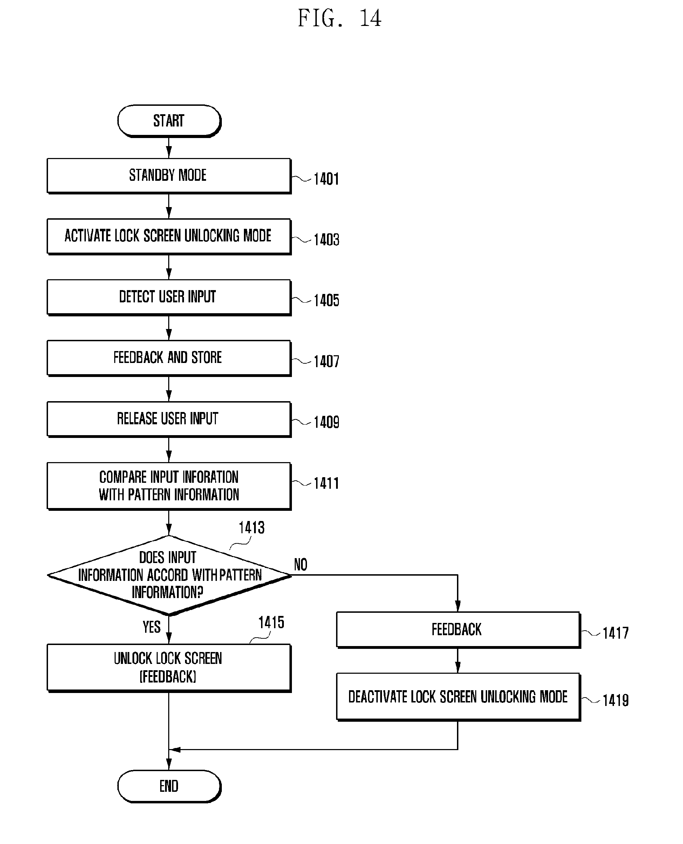

FIG. 14 is a flowchart illustrating a method of operating a lock screen in an electronic device according to an embodiment of the present disclosure.

Referring to FIG. 14, at operation 1401, the controller 170 may operate in a standby mode.

At operation 1403, the controller 170 may activate a lock screen unlocking mode in response to a user input while in a standby mode. For example, a user may input an interrupt for activating the lock screen unlocking mode in which a user input for unlocking the lock screen can be made. According to various embodiments of the present disclosure, the interrupt may represent an interrupt for entering the lock screen unlocking mode in which the user input for unlocking the lock screen may be received while a lock screen function is in the standby mode, and may be generated by an input of a specific function key of a user input unit 120 allocated for entrance to the lock screen unlocking mode or detection of a change in the state of the electronic device which is configured for entrance to the lock screen unlocking mode. When the interrupt is detected in the standby mode, the controller 170 may change to (activate) the lock screen unlocking mode for receiving the user input.

At operation 1405, the controller 170 may detect the user input.For example, the controller 170 may detect the user input while the lock screen unlocking mode is activated. For example, the user may input a user gesture on a touch screen 130 using a touch, a drag, a hold, and/or the like according to a pattern (e.g., a remembered pattern). Then, the controller 170 may detect the user input through the touch screen 130, and may identify a touched area, a drag direction, a holding time, and/or the like according to the detected user input.

At operation 1407, when the user input is detected in the lock screen unlocking mode, the controller 170 may provide feedback configured in response to the user input, and may store input information corresponding to the user input. For example, the controller 170 may count a configured threshold time interval (e.g., 1 sec, 2 sec, 3 sec, and/or the like) when the user input is maintained in a specific area, and may provide configured feedback (e.g., a vibration, a sound, lamp blinking, and/or the like) every time the threshold time interval elapses while the user input is maintained in the corresponding area. The controller 170 may generate and store input information based on at least one pattern by determining a change of the user input (e.g., a drag) and the number of feedback outputs.

At operation 1409, the controller 170 may detect release of the user input during the operation (e.g., feedback) corresponding to the user input. For example, when the user completes the user input according to the remembered pattern, the user may release the user input on the touch screen 130.

At operation 1411, when detecting the release of the user input, the controller 170 may compare the input information generated and stored according to the user input with preconfigured pattern information.

At operation 1413, the controller 170 may determine whether the input information accords with (e.g., corresponds to or otherwise is statistically equal to) the preconfigured pattern information.

If the controller 170 determines that the input information accords with (e.g., corresponds to or otherwise is statistically equal to) the preconfigured pattern information at operation 1413, then the controller 170 may proceed to operation 1415 at which the controller 170 may unlock the lock screen. For example, in response to the controller 170 determining that the input information accords with (e.g., corresponds to or otherwise is statistically equal to) the pattern information, the controller 170 may unlock the lock screen. According to various embodiments of the present disclosure, the controller 170 may also output feedback informing of the unlocking of the lock screen based on a user configuration when unlocking the lock screen.

If the controller 170 determines that the input information does not accord with (e.g., does not correspond to or otherwise is not statistically equal to) the preconfigured pattern information at operation 1413, then the controller 170 may proceed to operation 1471 at which the controller 170 may provide feedback. For example, in response to the controller 170 determining that the input information does not accord with (e.g., does not correspond to or otherwise is not statistically equal to) the pattern information, the controller 170 may output configured feedback for informing that the unlocking of the lock screen has failed.

At operation 1419, the controller 170 may deactivate the lock screen unlocking mode.

According to various embodiments of the present disclosure, the feedback for informing that the unlocking of the lock screen has failed may be selectively provided according to a user configuration. The controller 170 may change from the lock screen unlocking mode to the standby mode in response to the deactivation of the lock screen unlocking mode.

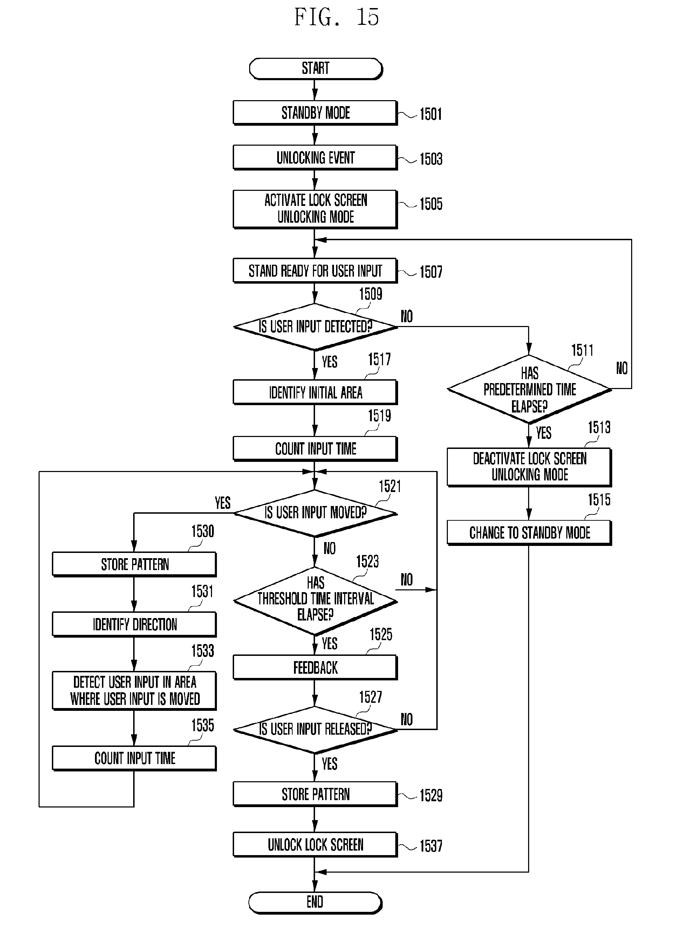

FIG. 15 is a flowchart illustrating a method of operating a lock screen in an electronic device according to an embodiment of the present disclosure.

Referring to FIG. 15, at operation 1501, the controller 170 may operate in a standby mode.

At operation 1503, the controller 170 may detect an unlocking event while being in a standby mode. For example, a user may input an interrupt for activating a lock screen unlocking mode in which a user input for unlocking the lock screen can be made, and the controller 170 may recognize the interrupt as the unlocking event.

In response to detection of the unlocking event, the controller 170 may activate the loack screen unlocking mode. For example, at operation 1505, when the unlocking event is detected in the standby mode, the controller 170 may activate the lock screen unlocking mode.

At operation 1507, the controller 170 maystand ready for a user input in the lock screen unlocking mode.

At operation 1509, the controller 170 may determine whether the user input is detected.

For example, the controller 170 may change to (activate) the lock screen unlocking mode in response to the unlocking event in the standby mode, stand ready for the user input (e.g., a touch) through a touch screen 130 in the lock screen unlocking mode for a configured predetermined time interval (e.g., a time interval for which the lock screen unlocking mode is maintained for detection of the user input, for example, 5 sec, 10 sec, and/or the like), and determine whether there is a user input within the configured predetermined time interval. The user may input a user gesture on the touch screen 130 using a touch, a drag, a hold, and/or the like according to a remembered pattern while the electronic device changes to the lock screen unlocking mode.

If the controller 170 determines that the user input has not been detected at operation 1509, the controller 170 may proceed to operation 1511 at which the controller 170 may determine whether a predetermined time has elapsed. For example, in response to determining that the user input has not been detected at operation 1509, the controller 170 may proceed to operation 1511 at which the controller 170 may determine whether the configured predetermined time interval has elapsed, in order to stand ready for the user input.

If the controller 170 determines that the predetermined time interval has not elapsed at operation 1511, then the controller 170 may return to operation 1507. For example, in response to determining that the predetermined time interval has not elapsed at operation 1511, the controller 170 may return to operation 1507 to perform the operations below operation 1507.

In contrast, if the controller 170 determines that the predetermined time interval has elapsed at operation 1511, then the controller 170 may proceed to operation 1513 at which the controler 170 may deactivate the lock screen unlocking mode. For example, in response to determining that the predetermined time interval has elapsed at operation 1511, the controller 170 may deactivate the lock screen unlocking mode.

Thereafter, at operation 1515, the controller 170 may change to the standby mode.

If the controller 170 determines that the user input has been detected at operation 1509, then the controller 170 may proceed to operation 1517 at which the controller may identifiy an initial area. For example, in response to determining that the user input has been detected, the controller 170 may identify an initial area where the user input (e.g., touch) is first input.

Thereafter, at operation 1519, the controller 170 may count input time for the user input in the initial area.

At operation 1521, the controller 170 may determine whether a user input is moved. For example, while counting the input time, the controller 170 may determine whether the user input (e.g., touch) is moved (e.g., dragged).

If the controller 170 determines that a user input is not moved at operation 1521, then the controller 170 may proceed to operation 1523 at which the controller determines whether a threshold time interval has elapsed. For example, in response to determining that the user input has not been moved, the controller 170 may determine whether a configured threshold time interval has elapsed. For example, the controller 170 may determine the user input is maintained (e.g., held) for the configured threshold time interval (e.g., 1 sec, 2 sec, 3 sec, and/or the like) or more in correspondence to the count of the input time. The user may maintain (hold) the user input in the area where the user input is first input. Such a case may correspond to a case in which an initial value of the pattern information is configured to have only the number of feedback outputs with no direction, for example, a case in which the pattern information is configured as "nothing (3) - leftward (3) - rightward (2)".

If the controller 170 determines that the threshold time interval has not elapsed at operation 1523, then the controller 170 may proceed to operation 1525 at which the controller may return to operation 1521. For example, in response to determining that the threshold time interval has not elapsed, the controller 170 may return to operation 1521 to perform the operations below operation 1521.

In contrast, if the controller 170 determines that the threshold time interval has elapsed at operation 1523, then the controller 170 may proceed to operation 1525 at which the controller 170 provides feedback. For example, in response to determining that the threshold time interval has elapsed, the controller 170 may provide feedback for the user input. For example, the controller 170 may provide feedback according to the preconfigured feedback information (e.g., a feedback method and an output type of feedback) every time the configured threshold time interval (e.g., 1 sec, 2 sec, 3 sec, and/or the like) elapses while the user input is maintained.

The controller 170 may determine a change in the user input (e.g., release of the user input, or a movement of the user input), providing the feedback every time the threshold time interval elapses while the user input is maintained.

At operation 1527, the controller 170 may determine whether the user input is released. According to variousembodiments of the present disclosure, the controller 170 may determine whether the user input is released, while providing the feedback for the user input.

If the controller 170 determines that the user input is not released at operation 1527, then the controller 170 may return to operation 1521. For example, in response to determining that the release of the user input has not been detected, the controller 170 may return to operation 1521 to perform the operations below operation 1521.

In contrast, if the controller 170 determines that the user input is released at operation 1527, then the controller 170 may proceed to operation 1529 at which the controller 170 stores the pattern. For example, in response to determining that the release of the user input has been detected, the controller 170 may store the pattern according to the user input (e.g., the direction of the user input (e.g., nothing, leftward, rightward, upward, and/or downward) and the number of feedback outputs (e.g., zero, once, twice, three time, or the like)). The controller 170 may generate and manage input information for the user input based on at least one pattern stored in correspondence to the user input.

At operation 1537, the controller 170 may perform an operation of unlocking the lock screen in response to the release of the user input. For example, the controller 170 may compare the input information generated according to the user input with the preconfigured pattern information, unlock the lock screen when the input information accords with (e.g., corresponds to or otherwise is statistically equal to) the pattern information, and determine a lock screen release failure when the input information does not accord with (e.g., does not correspond to or otherwise is not statistically equal to) the pattern information.

In contrast, if the controller 170 determines that the user input has been moved at operation 1521, then the controller 170 may proceed to opreation 1530 at which the controllre 170 stores the pattern. For example, in response to determining that the user input has been moved, the controller 170 may store the pattern according to the user input (e.g., the direction of the user input (e.g., nothing, leftward, rightward, upward, and/or downward) and the number of feedback outputs (e.g., zero, once, twice, three time, or the like)).

In the case in which the operation flow proceeds from operation 1517 to operation 1521, if the user input is moved from the area at whichthe user input is first input to another area before the threshold time interval elapses, namely, before feedback is output, the operation of storing the pattern at operation 1530 may be omitted. According to variousembodiments of the present disclosure, such a case may correspond to a case in which the user inputs a touch and then immediately moves the touch to another area by dragging the touch, in which case the initial user input may be processed as a blank. For example, when no interrupt occurs in the initially touched area, the user input in the corresponding area may be processed as "nothing" and may be used as a reference for determining the direction. Thus, the operation of storing the pattern in operation 1530 may be omitted in such a case.

Meanwhile, in the case in which the operation flow proceeds to operation 1521 via operations 1517 to 1527 or operations 1531 to 1535, the operation of storing the pattern at operation 1530 may be performed. According to variousembodiments of the present disclosure, such a case may correspond to a case in which a user holds a touch input in an initial area for a predetermined period of time and moves the touch to another area after feedback according to holding the touch is provided (e.g., no direction and three vibrations, "nothing (3)"), a case in which a user moves a touch, input to a specific area, to another area and then moves the touch to another area again before feedback is provided (e.g., a rightward direction and no vibration, "rightward (0)"), or a case in which a user moves a touch, input to a specific area, to another area (e.g., a first area) and then moves the touch from the another area (the first area) to another area (e.g., a second area) after feedback is provided in the first area (e.g., a rightward direction and three vibrations, "rightward (3)"). Namely, when at least one interrupt (e.g., at least one of the direction and the feedback) is generated for the user input, the pattern according to the generated interrupt may be stored.

Referring to FIG. 15, if the controller 170 determines that the user input has been moved at operation 1521, the controller 170 may proceed to operation 1530 at which the controller 170 may selectively store the pattern in correspondence to the previous state of the user input.

At operation 1531, the controller 170 may identify a direction in which the user input has been moved.

At operation 1533, the controller 170 may detect an area at whichthe user input has been moved and the user input in the area.

At operation 1535, the controller 170 may count input time for the user input. Thereafter, while counting the input time, the controller 170 may proceed to operation 1521 to determine again whether the user input has been moved.

According to various embodiments of the present disclosure, the respective modules may be configured with software, firmware, hardware, or combinations thereof. Furthermore, some or all modules may be configured within one entity, in which case the function of the corresponding module may be identically performed. Moreover, according to various embodiments of the present disclosure, respective operations may be executed sequentially, repeatedly, or in parallel. In addition, some operations may be omitted, or other operations may be added and executed.

Meanwhile, the various embodiments of the present disclosure as described above may be implemented in the form of a program instruction that can be performed through various computers, and may be recorded in a non-transitory computer readable recording medium. The non-transitory computer readable medium may include a program command, a data file, a data structure, and the like independently or in combination. The program instruction recorded in the recording medium is specially designed and constructed for the present disclosure, but may be well known to and may be used by those skilled in the art of computer software.

The non-transitory computer readable recording medium may include a magnetic medium such as a hard disc, a floppy disc, and a magnetic tape, an optical recording medium such as a Compact Disc Read Only Memory (CD-ROM) and a Digital Versatile Disc (DVD), a magneto-optical medium such as a floptical disk, and a hardware device specifically configured to store and execute program instructions, such as a ROM, a RAM, and a flash memory. Further, the program command may include a machine language code generated by a compiler and a high-level language code executable by a computer through an interpreter and the like. The hardware device may be configured to operate as one or more software modules in order to perform operations of the presentdisclosure, and vice versa.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of operating a lock screen in an electronic device, the method comprising:
receiving a user input while a lock screen function is operated;
providing feedback configured in response to the user input;
comparing input information according to the user input with preconfigured pattern information; and
operating the lock screen according to whether the input information accords with the pattern information.

2. The method of claim 1, further comprising:
maintaining a display unit of the electronic device in a turned off state when a lock screen unlocking mode is activated.

3. The method of claim 1, wherein the receiving of the user input comprises:
receiving the user input irrespective of a forward or reverse direction state of the electronic device.

4. The method of claim 1, wherein the providing of the feedback comprises:
outputting the feedback every time a preconfigured threshold time interval elapses while the user input is maintained in an area at which the user input is input.

5. The method of claim 1, wherein the providing of the feedback comprises:
outputting the feedback while the user input is being moved.

6. The method of claim 1, wherein the providing of the feedback comprises:
omitting the feedback when the user input is moved from an area at which the user input is input to another area before a preconfigured threshold time interval elapses.

7. The method of claim 1, further comprising:
generating the input information based on a pattern corresponding to a direction of the user input and the number of feedback outputs for the user input.

8. The method of claim 1, wherein the comparing of the input information comprises:
comparing a direction of the user input and the number of feedback outputs according to the input information with a direction and the number of feedback outputs according to the pattern information.

9. The method of claim 1, wherein the comparing of the input information comprises:
determining whether the user input is an input by a right hand or a left hand, and
determining whether the user input is an input by a forward or reverse direction state of the electronic device.

10. The method of claim 1, wherein the operating of the lock screen comprises:
determining whether the input information accords with the pattern information; and
unlocking the lock screen when the input information accords with the pattern information.

11. The method of claim 1, wherein the operating of the lock screen comprises:
determining whether the input information accords with the pattern information; and
determining a mode in which the user input is input, when the input information accords with the pattern information; and
unlocking the lock screen when the mode in which the user input is input accords with preconfigured mode configuration information.

12. The method of claim 1, wherein the comparing of the input information comprises:
comparing the input information with the pattern information when the user input is released.

13. An electronic device comprising:
a touch screen configured to receive a user input while a lock screen function of the electronic device is operated; and
a controller configured to control configured feedback to be output in response to the user input while the lock screen function is operated, and to operate a lock screen by determining whether input information according to the user input accords with preconfigured pattern information.

14. The electronic device of claim 13, further comprising:
a storage unit configured to store lock screen operating information containing the pattern information, and the input information generated according to the user input.

15. The electronic device of claim 13, wherein the controller is further configured to process a movement of the user input based on an identical direction state regardless of a forward or reverse direction state of the electronic device.
